# EUROPÄISCHE PATENTSCHRIFT

(11) **EP 1 929 170 B1**
(45) Veröffentlichungstag und Bekanntmachung des Hinweises auf die Patenterteilung: **04.03.2009**
(21) Anmeldenummer: 06792294.8
(22) Anmeldetag: 27.09.2006
(51) Int. Cl.: F16D 65/16, F16D 65/21

(54) **FAHRZEUGBREMSE, INSBESONDERE SATTELBREMSE**
VEHICLE BRAKE, IN PARTICULAR CALIPER BRAKE
FREIN DE VEHICULE, EN PARTICULIER FREIN A ETRIER

(30) Priorität: 27.09.2005 DE 102005046140
(43) Veröffentlichungstag der Anmeldung: 11.06.2008
(73) Patentinhaber: Lucas Automotive GmbH, 56070 Koblenz (DE)
(72) Erfinder: GILLES, Leo, 56077 Koblenz (DE)
(74) Vertreter: Thum, Bernhard
(86) Internationale Anmeldenummer: PCT/EP2006/009408
(87) Internationale Veröffentlichungsnummer: WO 2007/036357

(56) Entgegenhaltungen:
- DE-A1- 10 150 803
- DE-A1- 10 320 907
- DE-A1- 19 511 287
- DE-C1- 19 732 168

## Beschreibung

Die vorliegende Erfindung betrifft eine Fahrzeugbremse, insbesondere eine Sattelbremse, mit einem Gehäuse, einem in dem Gehäuse aufgenommenen und relativ zu diesem linear verlagerbaren Bremskolben zum Verschieben eines Bremsbelags und einer mechanischen Aktuatoranordnung zum Verlagern des Bremskolbens, wobei der Bremskolben in dem Gehäuse durch Beschicken einer Hydraulikkammer über einen hydraulischen Bremskreis verlagerbar ist und wobei die mechanische Aktuatoranordnung eine drehantreibbare in dem Gehäuse drehbare gelagerte Gewindespindel aufweist, wobei der Bremskolben in Folge einer Drehbewegung der Gewindespindel relativ zu dem Gehäuse linear verlagerbar ist.

Eine derartige Bremse ist beispielsweise aus dem Dokument DE-C-197 32 168 oder auch WO 2005/073043 A1 bekannt. Bei einer derartigen Fahrzeugbremse wird im Rahmen einer Betriebsbremsung der Bremskolben durch Beschicken der Hydraulikkammer mit Hydraulikfluid innerhalb des Gehäuses verlagert, um so einen Bremsbelag, auf eine Bremsscheibe zu zu bewegen und eine Bremswirkung zu erzielen. Zum Erzielen einer Feststellbremswirkung wird die Gewindespindel drehangetrieben, so dass der Bremskolben mechanisch verlagert oder zumindest arretiert wird. Insbesondere dann, wenn hohe Feststellbremskräfte erzielt werden sollen, ist es erforderlich, einen leistungsstarken Drehspindelantrieb bereitzustellen, was zu einer kostenintensiven Konstruktion führt. Um diesem Problem entgegenzutreten, wurde in dem vorstehend genannten Stand der Technik bereits angedacht, den Feststellbremsvorgang dadurch einzuleiten, dass zunächst der Bremskolben hydraulisch verlagert wird und sodann unter vorübergehender Aufrechterhaltung des Hydraulikdrucks die Gewindespindel drehangetrieben wird. Mit anderen Worten ist bei diesem Stand der Technik vorgesehen, dass dann, wenn die Feststellbremsanlage für bestimmte Betriebszustände Bremskräfte zu halten hat, die größer sind als die Bremskräfte, die sie selbst erzeugen kann, die Betriebsbremsanlage die zusätzlich benötigten Bremskräfte erzeugt. Es hat sich jedoch gezeigt, das bei herkömmlichen Fahrzeugbremsen insbesondere das Zuspannen aber auch das Lösen relativ viel Zeit in Anspruch nimmt. Insbesondere die Zeit zum Lösen der Feststellbremse wird als störend empfunden, da der Fahrer - wie er es von mechanischen Feststellbremsen kennt - unmittelbar nach Betätigung eines Bremsschalters erwartet, dass auch die Feststellbremse gelöst ist. Längere zeitliche Verzögerungen, die beispielsweise einen Anfahrvorgang beinträchtigen, sind daher zu vermeiden. Der vorstehend genannte Stand der Technik sieht jedoch vor, dass insbesondere bei hohen Feststellbremskräften sogar noch eine hydraulische Unterstützung zum Lösen der Feststellbremse erforderlich ist, da der motorische Antrieb der Feststellbremse in der Regel nicht stark genug ist, um die durch die Feststellbremskräfte hervorgerufene Selbsthemmungswirkung zu überwinden.

Es ist Aufgabe der vorliegenden Erfindung, eine Fahrzeugbremse der eingangs bezeichneten Art bereitzustellen, die bei einfachem und daher kostengünstigem Aufbau ein schnelles Herbeiführen und insbesondere Lösen des Feststellbremszustands vorsieht.

Diese Aufgabe wird durch eine Fahrzeugbremse der eingangs bezeichneten Art gelöst, bei der vorgesehen ist, dass die Gewindespindel mit einem selbsthemmenden Gewinde mit n Gewindegängen versehen ist, wobei die Zahl n und die Gewindesteigung derart gewählt sind, dass sich das Gewinde nahe der Selbsthemmungsgrenze befindet. Der Einsatz einer Gewindespindel mit selbsthemmendem Gewinde und großer Steigung scheint zunächst kontraproduktiv zu der Forderung nach einem schwachen und damit kostengünstig ausgebildeten motorischen Antrieb zu sein. Es gilt nämlich die Regel, dass bei gleicher Spannkraft (beispielsweise 15kN) das erforderliche Drehmoment (und damit die erforderliche Motorleistung) zunimmt, wenn die Spindelsteigung erhöht wird. Wird jedoch beim Herbeiführen des Feststellbremsvorgangs die wesentliche Verlagerung des Bremskolbens hydraulisch bewirkt, so dass die Gewindespindel lediglich in eine Arretierstellung, im wesentlichen ohne Gegenkraft, verlagert werden muss, so kann auch ein schwacher Antrieb für die Gewindespindel verwendet werden, da über die Gewindespindel an sich kein oder nur ein geringes Zuspannen des Bremskolbens erfolgt. Darüber hinaus gestaltet sich das Lösen des Feststellbremszustands mit einer mit größerer Steigung ausgebildeten Gewindespindel erheblich einfacher, da dadurch die Selbsthemmung leichter überwunden werden kann.

Wenn im Zusammenhang mit der Beschreibung dieser Erfindung von dem Begriff . Gewindespindel die Rede ist, dann bedeutet dieser Begriff, dass die Gewindespindel im Rahmen einer einfachen Mutter-Spindel-Anordnung vorgesehen sein kann. Gleichermaßen umfasst dieser Begriff aber auch Anwendungsfälle, bei denen die Gewindespindel innerhalb eines Kugelspindeltriebs (auch Kugelgewindetrieb genannt) oder innerhalb einer Planeten-Wälz-Gewindespindel-Anordnung oder innerhalb einer Rampenanordnung angeordnet ist. Alle erwähnten Anwendungsfälle der Erfindung sind von der Anspruchsformulierung mit umfasst.

Es können beliebig viele Gewindegänge oder auch große Gewindesteigungen vorgesehen sein. Maßgeblich ist jedoch, dass das Gewinde noch selbsthemmend ausgebildet ist, da andernfalls der Feststellbremszustand nicht aufrecht erhalten werden kann.

Erfindungsgemäß kann vorgesehen sein, dass der Bremskolben mit dem Gehäuse die Hydraulikkammer einschließt. Ferner kann vorgesehen sein, dass der Bremskolben bei einem Betriebsbremsvorgang hydraulisch verlagerbar ist und dass der Bremskolben bei einem Feststellbremsvorgang in einer Feststellbremsstellung vermittels der Gewindespindel arretierbar ist. Die Gewindespindel wirkt somit im Feststellbremszustand als Teil einer Strebe, über die sich der Bremskolben an dem Gehäuse abstützt, so dass die Spannkraft aufrecht erhalten werden kann. Eine Weiterbildung der Erfindung sieht vor, dass die Gewindespindel mit einer Mutteranordnung gewindemäßig zusammenwirkt, welche vorzugsweise in dem Bremskolben aufgenommen ist. In diesem Zusammenhang kann auch vorgesehen sein, dass sich der Bremskolben in dem Feststellbremszustand auf der Mutteranordnung abstützt, die sich dadurch selbsthemmend auf der Gewindespindel abstützt.

Wie vorstehend bereits erwähnt ist, kann erfindungsgemäß vorgesehen sein, dass zur Herbeiführung einer insbesondere hohen Feststellbremskraft der Bremskolben durch Beschicken der Hydraulikkammer verlagerbar ist und im verlagerten Zustand die Mutteranordnung über die Gewindespindel in eine Blockierstellung verlagerbar ist. Ferner kann vorgesehen sein, dass zum Aufheben der Feststellbremswirkung der Bremskolben durch Antreiben der Gewindespindel über die Mutteranordnung aus der Blockierstellung heraus verlagerbar ist. Dies ist besonders leicht aufgrund der großen Gewindesteigung möglich. Eine zusätzliche hydraulischen Unterstützung ist daher für das Aufheben des Feststellbremszustands nicht mehr erforderlich.

Vorzugsweise kann vorgesehen sein, dass die Gewindespindel, beispielsweise unter Zwischenschaltung einer Getriebeanordnung mit einer auf die Spindelsteigung abgestimmten Übersetzung, insbesondere einer Planetengetriebeänordnung, motorisch antreibbar ist. Auch durch diese Maßnahme lässt sich ein leistungsschwach ausgebildeter Motor verwenden, der eine entsprechend geringe Stromaufnahme aufweist. Aufgrund der geringen Stromaufnahme kann die Motoransteuerung in eine Steuereinheit des Hydrauliksystems integriert werden.

Hinsichtlich der Ausbildung des mehrgängigen Gewindes kann erfindungsgemäß vorgesehen sein, dass n im Bereich von 1 bis 4, vorzugsweise im Bereich bei 2 liegt. Ferner kann erfindungsgemäß vorgesehen sein, dass die Gewindesteigung im Bereich von 1 bis 5mm, vorzugsweise bei etwa 2,5mg, liegt.

Die Erfindung wird im Folgenden beispielhaft anhand der beiliegenden Figuren erläutert.
- Fg. 1: einen Schnitt durch eine erfindungsgemäße Fahrzeugbremse;
- Fg. 2: eine Einzelteildarstellung der Gewindespindelanordnung;
- Fg. 3: verschiedene Diagramme zu dem Betrieb der erfindungsgemäßen Fahrzeugbremse

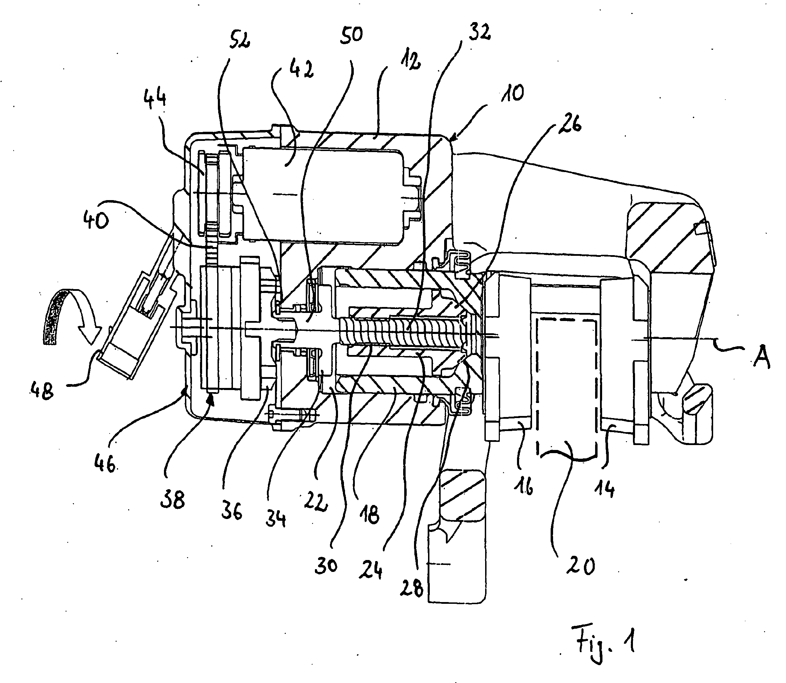

In Figur 1 ist eine erfindungsgemäße Fahrzeugsbremse allgemein mit 10 bezeichnet. Die Fahrzeugbremse 10 ist als Sattelbremse ausgeführt. Sie umfasst ein Gehäuse 12, in dem zwei Bremsbeläge 14 und 16 nach dem Schwimmsattelprinzip aufgenommen sind. Der Bremsbelag 16 lässt sich über einen Bremskolben 18 entlang einer Achse A auf eine lediglich strichliniert angedeutete Bremsscheibe 20 zu verlagern.

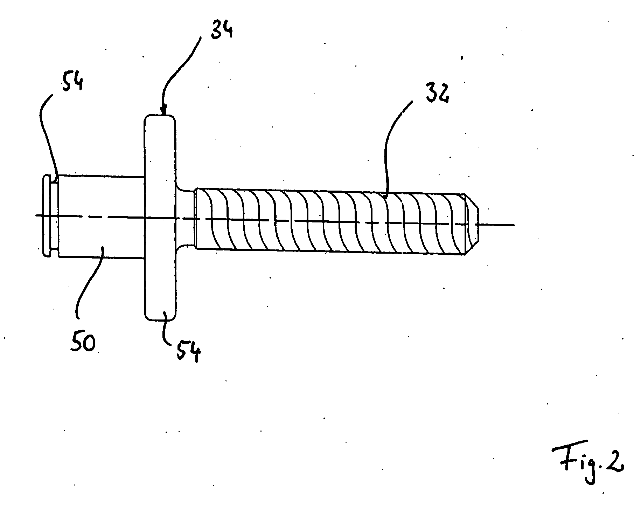

Der Bremskolben 18 schließt mit dem Gehäuse 12 eine Hydraulikkammer 22 ein. Der Bremskolben 18 ist hohl ausgebildet. In dem Bremskolben 18 ist eine Mutteranordnung 24 aufgenommen, die einen konusförmigen Kopfabschnitt 26 aufweist. Der konusförmige Kopfabschnitt 26 kann mit einem komplementär ausgebildeten Konusabschnitt 28 im Innern des Bremskolbens 18 in blockierenden Eingriff gebracht werden. Darüber hinaus ist die Mutteranordnung 24 drehfest in dem linear verlagerbaren Bremskolben 18 aufgenommen. Die Mutteranordnung 24 ist ebenfalls hohl ausgebildet und mit einem Gewindeabschnitt 30 versehen. In dem Gewindeabschnitt 30 ist eine Gewindespindel 32 aufgenommen, die in gewindemäßigem Eingriff mit dem Gewindeabschnitt 30 steht. Die Gewindespindel 32 ist Teil eines Spindelbauteils 34, das in Einzelteildarstellung in Figur 2 gezeigt ist. Das Spindelbauteil 34 ist drehfest mit einem Getriebeausgangsglied 36 einer Planetengetriebeanordnung 38 verbunden. Die Planetengetriebeanordnung 38 weist eine an die Spindelsteigung angepasste Übersetzung auf und ist über einen Antrieb, vorzugsweise mit einem Antriebszahnriemen 40, von einem Elektromotor 42 antreibbar. Die Planetengetriebeanordnung 38 sowie der Zahnriemen und die Ausgangswelle des Elektromotors 42, auf der eine Ausgangszahnrad 44 sitzt, sind in einem Gehäuseabschnitt 46 angeordnet. Der Gehäuseabschnitt 46 weist ferner einen elektrischen Zentralverbinder 48 auf. Das Spindelbauteil 34 ist über einen Lagerzapfenabschnitt 50 drehbar in dem Gehäuse 12 gelagert und stützt sich in axialer Richtung über einen Sicherheitsring 52 an dem Gehäuse 12 ab. Der Sicherheitsring 52 ist in einem umlaufenden Einstich 54 angeordnet.

Die Gewindespindel 32 des Spindelbauteil 34 ist mehrgängig ausgebildet, das heißt sie umfasst mehrere Gewindegänge. Im Beispielsfall ist die Gewindespindel doppelgängig ausgebildet mit einer Gewindesteigung von p = 2,5 mm. Dies garantiert zum Einen, dass die Gewindepaarung des Außengewindes der Gewindespindel 32 und des Gewindeabschnitts 30 bei axialer Belastung selbsthemmend, d. h. positionstabil ist, und zum Anderen, dass mit einer relativ geringen Anzahl von Umdrehungen des Spindelbauteils 34 verhältnismäßig hohe Stellhübe der Mutteranordnung 24 erreicht werden können. Es sei angemerkt, dass die Selbsthemmung von einer Vielzahl von Faktoren abhängt, insbesondere von dem Flankendurchmesser/Spindeldurchmesser, der Materialpaarung, der Temperatur, der Schmierung und von fertigungsbedingten Faktoren wie beispielsweise der Oberflächenrauhigkeit, so dass bei der ungünstigsten zusammensetzung dieser Faktoren, das heißt auch bei geringer Reibung (hohe Oberflächengüte, kleiner Reibwert) eine Selbsthemmung gewährleistet ist.

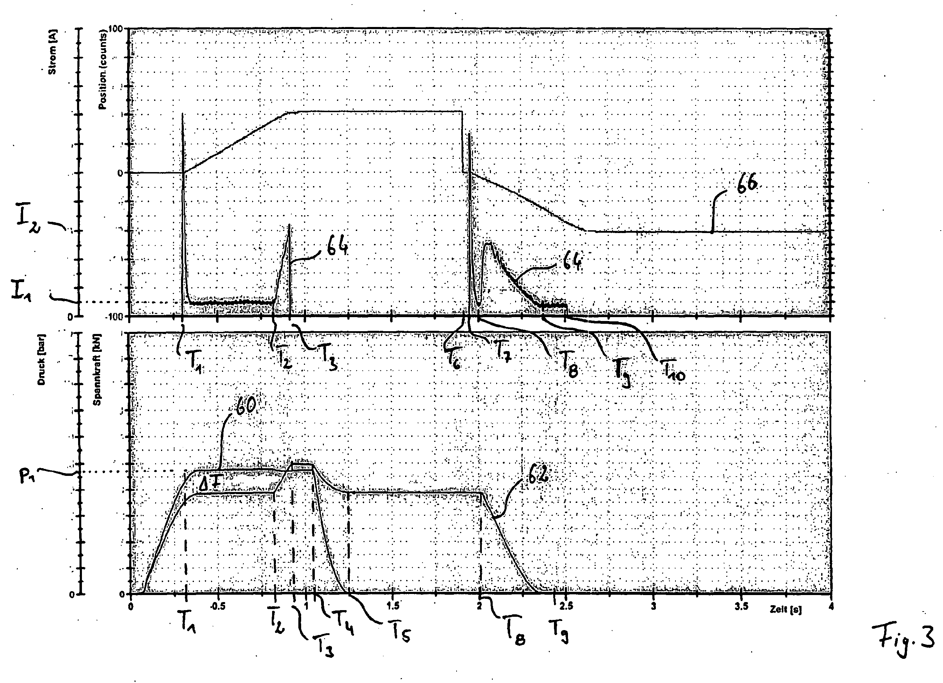

Im Folgenden soll die Betriebsweise der erfindungsgemäßen Fahrzeugbremse unter Bezugnahme auf Figur 3 beschrieben werden.

Während einer Betriebsbremsung, das heißt dann, wenn ein Fahrer ein mit der erfindungsgemäßen Fahrzeugbremse ausgerüstetes Fahrzeug abbremsen möchte, wird der Bremskolben und damit der Bremsbelag 16 hydraulisch verlagert, indem die Hydraulikkammer 22 über ein nicht gezeigtes Hydrauliksystem mit Hydraulikfluid beschickt wird. Das Hydrauliksystem umfasst vorzugsweise aktive Komponenten, das heißt eine Pumpe oder dergleichen einer elektrisch steuerbaren Betriebsbremsanlage, die neben einer Antiblockierregelfunktion von einer Fahrerbetätigung unabhängige, also automatische, Bremsfunktionen zulässt, wie beispielsweise eine Antriebsschlupfregelung (ASR) oder eine Fahrdynamikregelung (ESP). Dazu umfasst die Bremsanlage eine in herkömmlicher Weise ausgestatte elektrohydraulische Steuereinheit; einen elektronisch steuerbaren Bremskraftverstärker oder ist als sogenannte "Brake-by-wire" Anlage ausgebildet. Mit anderen Worten bedeutet dies, dass die Hydraulikkammer 22 auch unabhängig von einer Bremspedalbetätigung mit Hydraulikfluid beschickt werden kann.

Bei einer Aktivierung der Feststellbremse betätigt der Fahrer beispielsweise einen Schalter im Fahrzeug. Dies geschieht zum Zeitpunkt T = 0 Sekunden. In der Folge wird zunächst die Hydraulikkammer 22 mit Hydraulikfluid beschickt, wie Kurve 60 in Figur 3 unten zeigt. Der Hydraulikdruck steigt von dem Wert 0 bar bis auf einen Wert P1 an, der im Bereich von beispielsweise 60 bar bis 160 bar liegt. Mit dem Hydraulikdruck steigt auch die Spannkraft am Bremsbelag 26 wie durch Kurve 62 gezeigt. Zum Zeitpunkt T1, beispielsweise bei Erreichen eines bestimmten Drucks oder einer bestimmten Spannkraft wird sodann der Motor 42 aktiviert. Dies ist mit Kurve 64 gezeigt, die den Motorstrom wiederspiegelt. Kurve 66 spiegelt die Spindelposition wieder.

Man erkennt zum Zeitpunkt T1 eine Stromspitze. Diese resultiert aus der Überwindung von Haftreibung und Trägheitseffekten in der Mechanik (Getriebe 38 etc.) gemäß der Fahrzeugbremse nach Figur 1. Im Anschluss an die Stromspitze liegt der Motorstrom bei dem Wert I1 im Bereich von 0,5 Ampere bis 5 Ampere und bleibt im Wesentlichen konstant bis zum Zeitpunkt T2. Während dieser Zeit (T1 bis T2) wird die Mutteranordnung 24 dem bereits in eine vorläufige Feststellbremsposition vorgespannten Bremskolben 18 nachgeführt. Zum Zeitpunkt T2 gelangt die Mutteranordnung 24 mit ihrem Konusabschnitt 26 in Kontakt mit dem Konusabschnitt 28 an dem Bremskolben 18. Ab dem Zeitpunkt T2 bis zum Zeitpunkt T3 wird der Bremskolben 18 über den Motor 42 unter Zwischenschaltung des Getriebes 38, des Spindelbauteils 34 und der Motoranordnung 24 weiter zugespannt. Es kommt zu einer Spannkrafterhöhung von ΔF, wie in Figur 3 im unteren Diagramm gezeigt. Aufgrund der zunehmenden Spannkraft kommt es auch zu einem Anstieg des Motorstroms (Kurve 64) bis zum Zeitpunkt T3. Nach Erreichen eines bestimmten Motorstroms I₂ (beispielsweise bis zu 10 Ampere), der zusätzlich zu der hydraulisch erzielten Spannkraft für die zusätzliche Zusatzspannkraft ΔF sorgt, wird der Motor 42 deaktiviert.

Aufgrund der geringen Stromaufnahme kann die Motoransteuerung in eine Steuereinheit des Hydrauliksystems integriert werden.

Der Hydraulikruck in der Hydraulikammer 22 wird bis zu einem Zeitpunkt T4 weiter aufrechterhalten. Schließlich wird zum Zeitpunkt T4 der Hydraulikdruck in der Hydraulikkammer 22 reduziert, bis er zum Zeitpunkt T5 den Wert Null erreicht. Zwischen den Zeitpunkten T4 und T5 nimmt auch die Spannkraft am Bremsbelag 16 ab. Dies resultiert aus Setzeffekten in den mechanischen Komponenten der Fahrzeugbremse 10. Die Hydraulikkammer 22 ist somit zum Zeitpunkt T5 druckentlastet. Die Fahrzeugbremse 10 befindet sich in ihrem Feststellbremszustand, in dem der Bremskolben 18 in seiner Position über das Spindelbauteil 34 und die Mutteranordnung 24 mechanisch blockiert ist. Das Spindelbauteil 34 stützt sich dabei über den zwischen der Gewindespindel 32 und dem Lagerzapfenabschnitt 50 angeordneten Flansch 54 an dem Gehäuse 12 ab.

Wird nun zum Zeitpunkt T6 vom Fahrer beispielsweise über einen Schalter ein Signal ausgegeben, wonach der Feststellbremszustand aufgehoben werden soll, so wird der Motor 42 wieder in entgegengesetzte Richtung aktiviert. In der Folge kommt es zunächst wieder zu einer Stromspitze zum Zeitpunkt T7, die wie vorstehend bereits angedeutet aus einer Überwindung von Haftreibung und Trägheit der mechanischen Komponenten resultiert. Nach Überwindung von Leerwegen und dergleichen wird schließlich das Spindelbauteil 34 in zur Spannwirkung entgegengesetzter Richtung angetrieben. Es muss die Selbsthemmung (Haftreibung) der Gewindepaarung der Gewindespindel 32 und der Mutteranordnung 24 überwunden werden, was den Anstieg des Motorstroms zum Zeitpunkt T8 erklärt. Gleichzeitig kommt es zu einem schnellen Abbau der Spannkraft zwischen den Zeitpunkten T8 und T9, bis schließlich die Spannkraft den Betrag Null einnimmt. Mit abnehmender Spannkraft sinkt auch der Motorstrom, wie Kurve 64 zeigt. Schließlich befindet sich die Fahrzeugbremse in ihrer Ausgangsstellung, wie in Figur 1 gezeigt. Zum Zeitpunkt T10 wird der Motor 42 deaktiviert. Der Feststellbremszustand ist nun vollständig aufgehoben.

Durch das Zusammenwirken der erfindungsgemäßen Spindel 32 und einer darauf abgestimmten Getriebeanordnung 38 kann die Betätigungszeit, insbesondere die Lösezeit, erheblich verkürzt werden. In einem erfindungsgemäßen Beispielsfall, bei dem die Gewindespindel statt einer Steigung von einem Millimeter gemäß einer Standardspindel eine Spindelsteigung von etwa 2,5 mm aufweist, konnte die Lösezeit, das heißt der Zeitraum zwischen T8 und T9 auf weniger als eine Sekunden reduziert werden. Bei einer herkömmliche Spindelsteigung von 1 mm beträgt die Lösezeit mehr als 1 Sekunde.

Darüber hinaus ist es mit der erfindungsgemäßen Wahl der Spindelsteigung und der darauf abgestimmten Getriebeübersetzung möglich, das Lösemoment zum Lösen des Feststellbremszustands zu reduzieren. Demnach kann auch der Motor 42 leistungsschwächer, kleiner und damit kostengünstiger ausgebildet werden. Dies ist insbesondere deshalb möglich, weil zum Herbeiführen des Feststellbremszustands das ohnehin vorhandene Hydrauliksystem genutzt wird. Zum Lösen ist hingegen aufgrund des höheren Wirkungsgrads der Gewindespindel und der darauf abgestimmten Getriebeübersetzung (im Beispielsfall bei etwa 0,35) keine zusätzliche Hydraulikunterstützung erforderlich, anders als beim Stand der Technik. Mit der Erfindung wurde also erkannt, das durch Wahl einer Spindelsteigung nahe der Selbsthemmungsgrenze und durch entsprechende Abstimmung der Getriebeübersetzung ein leistungsschwächerer Motor verwendet werden kann, wobei zugleich die Betätigungszeit, insbesondere die Lösezeit und auch das Lösemoment reduziert werden können.

## Patentansprüche

1. Fahrzeugbremse (10), insbesondere Sattelbremse, mit
- einem Gehäuse (12),
- einem in dem Gehäuse (12) aufgenommenen und relativ zu diesem linear verlagerbaren Bremskolben (18) zum Verschieben eines Bremsbelags (16) und
- einer mechanischen Aktuatoranordnung zum Verlagern des Bremskolbens (18),
wobei der Bremskolben (18) in dem Gehäuse (12) durch Beschicken einer Hydraulikkammer (22) über einen hydraulischen Bremskreis verlagerbar ist und wobei die mechanische Aktuatoranordnung eine drehantreibbare in dem Gehäuse (12) drehbar gelagerte Gewindespindel (32) aufweist, wobei der Bremskolben (18) in Folge einer Drehbewegung der Gewindespindel 32 relativ zu dem Gehäuse (12) linear verlagerbar ist,
**dadurch gekennzeichnet, dass** die Gewindespindel (32) mit einem selbsthemmenden Gewinde mit n Gewindegängen versehen ist, wobei die Zahl n und die Gewindesteigung derart gewählt sind, dass sich das Gewinde nahe der Selbsthemmungsgrenze befindet.

2. Fahrzeugbremse (10) nach Anspruch 1,
**dadurch gekennzeichnet, dass** der Bremskolben (18) mit dem Gehäuse (12) die Hydraulikkammer (22) einschließt.

3. Fahrzeugbremse (10) nach Anspruch 1 oder 2,
**dadurch gekennzeichnet, dass** der Bremskolben (18) in einem Betriebsbremszustand hydraulisch verlagerbar ist und dass der Bremskolben (18) in einem Feststellbremszustand in einer Feststellbremsstellung vermittels der Gewindespindel (32) arretierbar ist.

4. Fahrzeugbremse (10) nach einem der vorangehenden Ansprüche,
**dadurch gekennzeichnet, dass** die Gewindespindel (32) mit einer Mutteranordnung (24) gewindemäßig zusammenwirkt, welche in dem Bremskolben (18) aufgenommen ist.

5. Fahrzeugbremse (10) nach Anspruch 4,
**dadurch gekennzeichnet, dass** sich der Bremskolben (18) in dem Feststellbremszustand auf der Mutteranordnung (24) abstützt, die sich **dadurch** selbsthemmend auf der Gewindespindel (32) abstützt.

6. Fahrzeugbremse (10) nach Anspruch 5,
**dadurch gekennzeichnet, dass** zur Herbeiführung einer insbesondere hohen Feststellbremskraft der Bremskolben (18) durch Beschicken der Hydraulikkammer (22) verlagerbar ist und im verlagerten Zustand die Mutteranordnung (24) über die Gewindespindel (32) in eine Blockierstellung verlagerbar ist.

7. Fahrzeugbremse (10) nach Anspruch 5 oder 6,
**dadurch gekennzeichnet, dass** zum Aufheben der Feststellbremswirkung der Bremskolben (18) durch Antreiben der Gewindespindel (32) über die Mutteranordnung (24) aus der Blockierstellung heraus verlagerbar ist.

8. Fahrzeugbremse (10) nach einem der vorangehenden Ansprüche,
**dadurch gekennzeichnet, dass** die Gewindespindel (32), vorzugsweise unter Zwischenschaltung einer auf die Gewindespindel abgestimmten Getriebeanordnung (38), insbesondere einer Planetengetriebeanordnung, motorisch antreibbar ist.

9. Fahrzeugbremse (10) nach Anspruch 8,
**dadurch gekennzeichnet, dass** die Ansteuerung des motorischen Antriebs in einer Steuereinheit des hydraulischen Bremskreises integrierbar ist.

10. Fahrzeugbremse (10) nach einem der vorangehenden Ansprüche,
**dadurch gekennzeichnet, dass** n im Bereich von 1 bis 4, vorzugsweise bei 2 liegt.

11. Fahrzeugbremse (10) nach einem der vorangehenden Ansprüche,
**dadurch gekennzeichnet, dass** die Gewindesteigung der Gewindespindel im Bereich von 1 bis 5mm, vorzugsweise bei etwa 2,5mm, liegt.

12. Verfahren zum Betätigen einer Fahrzeugbremse (10) nach einem der vorangehenden Ansprüche,
wobei zum Herbeiführen des Feststellbremszustandes zunächst der Bremskolben durch Beschicken der Hydraulikkammer mit Hydraulikfluid in eine vorläufige Feststellbremsposition verlagert wird, sodann die Gewindespindel drehangetrieben wird, bis der Bremskolben in eine vorbestimmte Feststellbremsposition vorgespannt ist, und sodann die Hydraulikkammer hydraulisch entlastet wird,
und wobei zum Aufheben des Feststellbremszustands lediglich die Gewindespindel drehangetrieben wird, ohne dass vorab die Hydraulikkammer mit Hydraulikfluid beschickt wird.

## Claims

1. Vehicle brake (10), in particular a caliper brake, having
- a housing (12),
- a brake piston (18) accommodated in and linearly displaceable relative to the housing (12) for displacing a brake lining (16) and
- a mechanical actuator arrangement for displacing the brake piston (18), wherein the brake piston (18) is displaceable in the housing (12) by charging a hydraulic chamber (22) by means of a hydraulic brake circuit and wherein the mechanical actuator arrangement comprises a threaded spindle (32), which is mounted rotatably in the housing (12) and may be set in rotation, wherein the brake piston (18) as a result of a rotational movement of the threaded spindle (32) is linearly displaceable relative to the housing (12),
**characterized in that** the threaded spindle (32) is provided with a self-locking thread having n flights, wherein the number n and the thread lead are selected in such a way that the thread is close to the self-locking limit.

2. Vehicle brake (10) according to claim 1,
**characterized in that** the brake piston (18) with the housing (12) encloses the hydraulic chamber (22).

3. Vehicle brake (10) according to claim 1 or 2,
**characterized in that** the brake piston (18) in a service brake state is hydraulically displaceable and that the brake piston (18) in a parking brake state is arrestable in a parking brake position by means of the threaded spindle (32).

4. Vehicle brake (10) according to one of the preceding claims,
**characterized in that** the threaded spindle (32) interacts thread-wise with a nut arrangement (24) that is accommodated in the brake piston (18).

5. Vehicle brake (10) according to claim 4,
**characterized in that** the brake piston (18) in the parking brake state is supported on the nut arrangement (24), which is therefore supported in a self-locking manner on the threaded spindle (32).

6. Vehicle brake (10) according to claim 5,
**characterized in that** for realizing an, in particular, high parking brake force the brake piston (18) is displaceable by charging the hydraulic chamber (22) and in the displaced state the nut arrangement (24) is displaceable into a blocking position by means of the threaded spindle (32).

7. Vehicle brake (10) according to claim 5 or 6,
**characterized in that**, for cancelling the parking brake effect, the brake piston (18) may be displaced by means of the nut arrangement (24) out of the blocking position by driving the threaded spindle (32).

8. Vehicle brake (10) according to one of the preceding claims,
**characterized in that** the threaded spindle (32) may be motor-driven, preferably via a gear arrangement (38) adapted to the threaded spindle, in particular a planetary gear arrangement.

9. Vehicle brake (10) according to claim 8,
**characterized in that** the control unit of the motor drive may be integrated in a control unit of the hydraulic brake circuit.

10. Vehicle brake (10) according to one of the preceding claims,
**characterized in that** n is in the region of 1 to 4, preferably 2.

11. Vehicle brake (10) according to one of the preceding claims,
**characterized in that** the thread lead of the threaded spindle is in the region of 1 to 5 mm, preferably approximately 2.5 mm.

12. Method of actuating a vehicle brake (10) according to one of the preceding claims,
wherein, for realizing the parking brake state, initially the brake piston is displaced into a provisional parking brake position by charging the hydraulic chamber with hydraulic fluid, then the threaded spindle is set in rotation until the brake piston is biased into a predetermined parking brake position, and then the hydraulic chamber is hydraulically relieved,
and wherein, for cancelling the parking brake state, only the threaded spindle is set in rotation without the hydraulic chamber being previously charged with hydraulic fluid.

## Revendications

1. Frein de véhicule (10), en particulier un frein à étrier, comprenant
- un carter (12),
- un piston de frein (18) logé dans le carter (12) et déplaçable linéairement par rapport à celui-ci pour déplacer une garniture de frein (16), et
- un système d'actionnement mécanique server à déplacer le piston de frein (18), ledit piston de frein (18) pouvant être déplacé dans le carter (12) par alimentation d'une chambre hydraulique (22) par l'intermédiaire d'un circuit de freinage hydraulique, et le système d'actionnement mécanique présentant une broche filetée (32) montée mobile en rotation dans le carter (12) et pouvant être entraînée en rotation, le piston de frein (18) étant déplaçable linéairement par rapport au carter (12) lorsque la broche filetée (32) est mise en rotation,
**caractérisé en ce que** la broche filetée (32) est pourvue d'un filetage autobloquant à n filets, le nombre n et le pas du filetage étant choisis de sorte que le filetage se trouve près de la limite du blocage automatique.

2. Frein de véhicule (10) selon la revendication 1,
**caractérisé en ce que** le piston de frein (18) délimite avec le carter (12) une chambre hydraulique (22).

3. Frein de véhicule (10) selon la revendication 1 ou 2,
**caractérisé en ce que** le piston de frein (18) peut être déplacé hydrauliquement dans un état de freinage de service et **en ce que**, dans un état de freinage de stationnement, le piston de frein (18) peut être bloqué dans une position de freinage de stationnement par l'intermédiaire de la broche filetée (32).

4. Frein de véhicule (10) selon l'une des revendications précédentes,
**caractérisé en ce que** la broche filetée (32) coopère avec un système femelle à filetage intérieur (24), lequel est logé dans le piston de frein (18)

5. Frein de véhicule (10) selon la revendication 4,
**caractérisé en ce que**, à l'état de freinage de stationnement, le piston de frein (18) s'appuie sur le système femelle à filetage intérieur (24) qui s'appuie de ce fait de manière autobloquante sur la broche filetée (32).

6. Frein de véhicule (10) selon la revendication 5,
**caractérisé en ce que**, pour produire une force de freinage de stationnement particulièrement élevée, le piston de frein (18) peut être déplacé par alimentation de la chambre hydraulique (22) et que, à l'état déplacé, le système femelle à filetage intérieur (24) peut être déplacé dans une position de blocage par l'intermédiaire de la broche filetée (32).

7. Frein de véhicule (10) selon la revendication 5 ou 6,
**caractérisé en ce que**, pour supprimer l'effet de freinage de stationnement, le piston de frein (18) peut être déplacé en dehors de la position de blocage par entraînement de la broche filetée (32) par l'intermédiaire du système femelle à filetage intérieur (24).

8. Frein de véhicule (10) selon l'une des revendications précédentes,
**caractérisé en ce que** la broche filetée (32) peut être entraînée par moteur, préférentiellement en intercalant un dispositif de transmission (38) adapté à la broche filetée, plus particulièrement un dispositif de transmission à engrenages planétaires.

9. Frein de véhicule (10) selon la revendication 8,
**caractérisé en ce que** la commande de l'entraînement par moteur peut être intégrée dans une unité de commande du circuit de freinage hydraulique.

10. Frein de véhicule (10) selon l'une des revendications précédentes,
**caractérisé en ce que** n est compris dans une plage allant de 1 à 4, et est préférentiellement égal à 2.

11. Frein de véhicule (10) selon l'une des revendications précédentes,
**caractérisé en ce que** le pas du filet de la broche filetée est compris dans une plage allant de 1 à 5 mm et est préférentiellement égal à environ 2,5 mm.

12. Procédé pour actionner un frein de véhicule (10) selon l'une des revendications précédentes,
le piston étant dans un premier temps déplacé dans une position de freinage de stationnement provisoire par alimentation en fluide hydraulique de la chambre hydraulique, puis la broche filetée entraînée en rotation jusqu'à ce que le piston de frein soit précontraint dans une position de freinage de stationnement prédéterminée, et la chambre hydraulique déchargée pour engendrer l'état de freinage de stationnement,
et la broche filetée étant, pour supprimer l'état de freinage de stationnement, entraînée en rotation sans que la chambre hydraulique soit préalablement alimentée en fluide hydraulique.
